# EUROPÄISCHE PATENTSCHRIFT

(11) **EP 0 845 514 B1**
(45) Veröffentlichungstag und Bekanntmachung des Hinweises auf die Patenterteilung: **28.04.2004**
(21) Anmeldenummer: 97119855.1
(22) Anmeldetag: 13.11.1997
(51) Int. Cl.: C09J 7/02

(54) **Klebeband**
Adhesive tape
Ruban adhésif

(30) Priorität: 30.11.1996 DE 19649727
(43) Veröffentlichungstag der Anmeldung: 03.06.1998
(73) Patentinhaber: Tesa AG, 20253 Hamburg (DE)
(72) Erfinder: Lühmann, Bernd, Dr., 22846 Norderstedt (DE); Junghans, Andreas, 22457 Hamburg (DE)

(56) Entgegenhaltungen:
- EP-A- 0 735 121
- DE-A- 4 339 604
- DE-C- 4 222 849

## Beschreibung

Die Erfindung betrifft ein Klebeband für eine durch Zug rückstandsfrei und beschädigungslos wiederlösbare Verklebung, sowie seine Verwendung.

Hochdehnbare elastische Klebfolien für wiederlösbare Verklebungen, die durch Ziehen im wesentlichen in Richtung der Verklebungsebene wiederlösbar sind, sind bekannt und im Handel unter der Bezeichnung "tesa Power-Strips" erhältlich. Damit hergestellte Verklebungen bieten kraftvollen Halt und lassen sich doch spurlos wiederablösen ohne Beschädigung des Untergrundes oder der Fügeteile, wie dies in DE 33 31 016 C2 beschrieben ist. DE 4.222.849, DE 4.233.872, DE 4.428.587, DE 4.431.914 und DE 195 11 288 beschreiben u.a. spezielle Ausführungen und Applikationen vorgenannter Klebfolien.

Mehrschichtige Klebfolien, welche hoch dehnbare wenig elastische oder auch hochdehnbare elastische Folienträger enthalten sowie Anwendungen selbiger Klebstoff-Folien sind ebenfalls bekannt, so aus US 4,024,312 "Pressure-Sensitive Adhesive Tape for medical use - having an extensible, elastic block copolymer backing", WO 92/11332 "Removable Adhesive Tape" (PSA tape using highly extensible backing with photopolymerized acrylic PSA), WO 92/11333 (PSA tape using highly extensible essentially inelastic backing), WO 93/01979 "Sichern von Stapeln mit Stretch-Klebeband" und WO 94/21157 "Article Support using stretch releasing adhesive".

So beschreibt WO 92/11333 ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung < ca 50% Rückstellvermögen aufweist. US 4,024,312 beschreibt entsprechend entklebende Selbstklebebänder von im wesentlichen kautschukelastischer Natur.

In der Praxis zeigt sich, daß mit den zuvor genannten Selbstklebebändern auf glatten und festen Untergründen im Allgemeinen hohe Verklebungsfestigkeiten erreicht werden können. Auf rauhen Untergründen ist die Verklebungsfestigkeit insbesondere für Produkte von geringer Dicke, jedoch auch für Selbstklebebänder höherer Schichtstärke, für zahlreiche Anwendungen ungenügend. Ursache für die unzureichende Verklebungsfestigkeit ist wahrscheinlich vornehmlich eine nicht ausreichende Verklebungsfläche, bedingt durch eine zu niedrige Konformibilität der Klebebänder an rauhe und unregelmäßige Oberflächen, insbesondere wenn zwei rauhe Untergründe miteinander verklebt werden sollen. Z. B. werden bei Verklebungen planarer Materialien mittels tesa Power-Strips auf gestrichener Rauhfasertapete bei praxisgerechten Anpreßdrucken (100 N/7,4 cm²) oft nur Verklebungsflächen von ca 10% bis 40% der haftklebrigen Fläche erreicht. Aber auch bei der Verklebung auf glatte planare Oberflächen kann eine unzureichende Verklebungsfläche Begründung für eine mangehafte Verklebungsfestigkeit sein. Ursache ist wohl der Einschluß von Luftblasen in den Verklebungsflächen. Entsprechende Luftblasen sind oft auch durch hohe Anpreßdrucke nicht vollständig zu eliminieren. In ungünstigen Fällen können Verklebungen, die entsprechende Lufteinschlüsse aufweisen, im Vergleich zu vollflächig und luftblasenfrei verklebten Mustern drastisch reduzierte Verklebungsfestigkeiten bedingen.

US 5,516,581 und WO 95/06691 beschreiben durch Dehnen im wesentlichen in der Verklebungsebene wiederablösbare Selbstklebebänder, deren Träger polymere Schäume enthalten. Insbesondere beschreibt WO 95/06691, daß durch Einsatz von Polymerschäume enthaltende Trägermaterialien, durch Verstrecken wiederablösbare Selbstklebebänder erhältlich sind, die eine deutlich verbesserte Anschmiegsamkeit an rauhen und ungleichmäßigen Oberflächen aufweisen. Infolge der hierdurch erreichten höheren Verklebungsfläche lassen sich mit diesen Produkten auch auf rauhen und unregelmäßig geformten Untergründen hohe Verklebungsfestigkeiten realisieren.

Entscheidend für die Konformibilität der gewünschten Selbstklebebänder an rauhe und unregelmäßige Oberflächen und damit die erreichbare Verklebungsfestigkeit auf entsprechenden Untergründen sind primär die mechanischen Eigenschaften des Selbstklebebandes in Richtung der Verklebungsebene (Stauchhärte, Reißfestigkeit, Oberflächenbeschaffenheit, Druckverformungsrest etc.) sowie die Dicke des Selbstklebebandes, Eigenschaften, die wesentlich durch das Eigenschaftsprofil des verwendeten schaumstoffhaltigen Zwischenträgers in eben dieser Vorzugsrichtung und durch dessen Dicke definiert sind. Die mechanischen Eigenschaften in Verstreckungsrichtung, die den Ablöseprozeß wesentlich beeinflussen, sowie solche senkrecht zur Verklebungsebene, die die Anpassungfähigkeit an rauhe und unregelmäßige Untergründe wesentlich bestimmen, können mit den bisher bekannten Klebstoff-Folien jedoch nicht beliebig unabhängig voneinander gesteuert werden. Für den Ablöseprozeß sind dabei insbesondere niedrige Stripkräfte erwünscht, um einerseits ein leichtes und angenehmes Ablösen zu ermöglichen, andererseits aber auch um ein zerstörungsfreies Ablösen auch von sehr empfindlichen Untergründen, wie z. B. Tapeten, zu erreichen. Ein leichtes Ablösen wird dann beobachtet, wenn die Selbstklebebänder eine hohe Dehnung bei gleichzeitig möglichst niedriger Streckspannung aufweisen.

Aufgabe der vorliegenden Erfindung war es, die vorgenannten Nachteile zu überwinden, insbesondere Selbstklebebänder zu erhalten, welche:
- durch Verstrecken insbesondere in der Verklebungsebene rückstands- und zerstörungsfrei wiederablösbar sind,
- die durch die Verwendung schaumstoffhaltiger Zwischenträger eine hohe Komformibilität zu rauhen und unregelmäßig geformten Oberflächen aufweisen und damit hohe Verklebungsfestigkeiten auf entsprechenden Untergründen erlauben,
- welche die Vielzahl der im Markt erhältlichen Schaumstoffe nutzen können und
- welche gleichzeitig eine gezielte Steuerung der Ablösekräfte (Stripkräfte) durch entsprechende Modifikation der schaumstoffhaltigen Zwischenträger zulassen,
- wobei die schaumstoffhaltigen Zwischenträger zur, zum rückstands- und zerstörungsfreien Ablösen durch Verstrecken im wesentlichen in der Verklebungsebene, benötigten Reißfestigkeit nicht beizutragen brauchen.

Gelöst wird dies durch Klebebänder, wie sie näher in den Ansprüchen gekennzeichnet sind, insbesondere
- durch Verstrecken insbesondere in der Verklebungsebene rückstands- und zerstörungsfrei wiederablösbare Klebstoff-Folien, welche schaumstoffhaltige Träger bzw. Zwischenträger enthalten, wobei
- entsprechende schaumstoffhaltige Träger durch eine Schädigung/Vorbehandlung, wie z. B. Zerschneiden, Perforieren oder Stanzen, gezielt modifiziert sind, wodurch
- die zum Verstrecken vorgenannter schaumstoffhaltiger Träger benötigten Kräfte steuerbar sind und gegenüber den Streckkräften nicht derart vorbehandelter schaumstoffhaltiger Träger erniedrigt sind, so daß
- resultierende Klebstoff-Folien, welche vorgenannte schaumstoffhaltige Träger nutzen, über verringerte Ablösekräfte und somit ein verbessertes Ablöseverhalten verfügen.
- Das rückstands- und zerstörungsfreie Wiederablösen erfindungsgemäßer Selbstklebebänder wird durch eine ausreichend hohe Reißfestigkeit und Reißdehnung der in Kombination mit o. g. Schaumstoffen genutzen Haftklebemassen erreicht.

Durch die hier beschriebene Möglichkeit der gezielten Vorbehandlung (Schädigung) von schaumstoffhaltigen Trägern steht eine sehr große Auswahl von Schäumen für diese Anwendung zur Verfügung. Selbstklebebänder mit breit gefächertem Anwendungsspektum auf Basis preiswerter Rohstoffe lassen sich hierdurch realisieren. Durch die Art der Vorbehandlung sowie Art und Schichtstärke der verwendeten Haftklebemassen lassen sich insbesondere die Ablösekräfte (Stripkräfte) erfindungsgemäßer Selbstklebebänder in weiten Bereichen steuern. Da die zum Entkleben durch Verstrecken benötigten Ablösekräfte wesentlich durch die zur Verstreckung der Träger nötige Kraft mitbeeinflußt wird, liegen die Ablösekräfte für erfindungsgemäße Selbstklebebänder gegenüber den in US 5,516,581 und WO 95/06691 beschriebenen bei Verwendung identischer Haftklebemassen und Klebmasseaufträge durchweg bei niedrigeren Werten, was einen wesentlichen Vorteil für den Anwender darstellt.

In US 5,516,581 und WO 95/06691 beschriebene Schaumstoffträger müssen zudem über ihre gesamte Lebenszeit die für den Ablöseprozeß durch Strippen nötige hohe Reißfestigkeit und Dehnfähigkeit besitzen. Tritt eine Reduzierung einer der vorgenannten Parameter durch Alterung ein, so ist der rückstandsfreie Ablöseprozeß gefährdet. Gleiches gilt nicht für erfindungsgemäße Klebstoff-Folien, da hier der rückstandsfreie Wiederablöseprozeß primär durch das Eigenschaftsprofil der verwendeten Haftklebemassen bestimmt wird, nicht jedoch durch die mechanische Festigkeit der genutzten Trägerfolien in der Richtung, in der diese Klebstoff-Folien durch Verstreckung gelöst werden können.

Bei Verklebung auf rauhen und sehr empfindlichen Haftgründen, wie z. B. gestrichener Rauhfasertapete, zeigt sich, daß erfindungsgemäße Selbstklebebänder infolge der höheren Verklebungsfläche eine wesentlich gleichmäßigere Belastung der Verklebungsuntergründe ermöglichen. Hierdurch ergeben sich merklich geringere Zerstörungen der Haftgründe beim Wiederablösen, etwa in Form von Farbausrissen, und eine deutlich höhere Belastbarkeit, insbesondere bei weniger festen Untergründen im Vergleich zu Klebstoff-Folien, die keinen Schaumstoffzwischenträger nutzen.

### Beispielhafte Anwendungen

Rückstandsfrei und zerstörungsfrei wiederablösbare Selbstklebebänder für:
- Originalverschlußapplikationen, ein und beidseitig haftklebrig.
- die Fixierung von Postern, Bildern, Kalendern, Postkarten, Hinweisschilder, selbstklebenden Haken, auch vorkonfektioniert,
- Etiketten, z. B. Preisauszeichnungsetiketten,
- allgemein zum Verbinden von zu einem späteren Zeitpunkt wieder zu entklebender Materialien.
- Dämpfungselemente, Dämmelemente, Dichtungselemente.

### Einsatzmaterialien

### Haftklebemassen

Als Haftklebemassen finden bevorzugt solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere können modifiziert sein, z. B. funktionalisiert durch Umsetzung mit Maleinsäureanhydrid. Blockcopolymere von Vinylaromaten und lsobutylen sind ebenfalls erfindungsgemäß einsetzbar. Sämtliche der vorgenannten Polymere können alleine oder im Gemisch miteinander genutzt werden. Typische Einsatzkonzentrationen für die Styrolblockcopolymere liegen im Bereich zwischen 15Gew.% und 75Gew.%, bevorzugt im Bereich zwischen 30Gew.% und 60Gew.% besonders bevorzugt im Bereich zwischen 35Gew.% und 55Gew.%.

Als Klebrigmacher sind u. a. geeignet: Kolophonium und seine Derivate, aliphatische, aromatenmodifizierte aliphatische, aromatische und phenolmodifizierte Klebharze um nur einige zu nennen. Einsatzkonzentrationen der Harze liegen typischerweise im Bereich zwischen 15Gew.% und 75Gew.%, bevorzugt im Bereich 30Gew.% und 65Gew.%, besonders bevorzugt im Bereich zwischen 35Gew.% und 60Gew.%. Bevorzugt eingesetzt werden im Falle der Verwendung von Kolophonium und dessen Derivate Ester von teil- oder vollhydriertem Kolophonium.

Als endblockverträgliche Harze (vornehmlich mit dem Vinylaromatenblöcken verträgliche Harze) können Homo- und Copolymere von Vinylaromaten, wie z. B. Styrol oder α-Methylstyrol, Polyphenylenoxide, aber auch phenylenoxidmodifizierte Harze genutzt werden.

Weitere optimale Abmischkomponenten umfassen Weichmacheröle und Flüssigharze (Einsatzkonzentrationen zwischen 0 und max. ca 35Gew.%), Füllstoffe (verstärkende und nicht verstärkende), z. B. Siliziumdioxid, insbesondere synthetische Silica, Glas (gemahlen oder in Form von Kugeln), Aluminiumoxide, Zinkoxide, Calciumcarbonate, Titandioxide, Ruße, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als weitere Polymere können natürliche und synthetische, wie z. B. Naturkautschuk, synthetische Polyisoprene, Polybutadiene, Polychloroprene, SBR, Kraton Liquid (Shell Chemicals), niedermolekulare Styrol-Dien Blockcopolymere, wie z. B. Kraton LVSI 101, Polyisobutylene usw. vorhanden sein, welche die vinylaromatenhaltigen Blockcopolymere bis zu ca 50Gew.% ersetzen können.

Erfindungsgemäße Haftklebemassen können chemisch, insbesondere strahlenchemisch (z. B. durch UV-Bestrahlung, γ-Bestrahlung oder durch Bestrahlung mittels schneller Elektronen) vemetzt sein.

Erfindungsgemäße Klebmassen sind optional solche, deren Haftklebrigkeit erst durch thermische Aktivierung erzeugt wird.

Geeignete Haftklebemassen sind neben den zuvor beschriebenen auf Basis vinylaromatenhaltiger Blockcopolymere all solche, welche über eine für den Ablöseprozeß ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden. Erfindungsgemäß geeignet sind z. B. haftklebrige Acrylatcopolymere, welche als Comonomere Makromonomere enthalten, wobei die Makromonomere eine Glastemperatur von > +40°C aufweisen. Die hohe Reißfestigkeit entsprechender Copolymere wird wahrscheinlich durch die Assoziation der Makromonomere erreicht. Geeignete Makromonomere sind z. B. methacryloylterminierte Polymethylmethacrylate.

### Schaumstoffe

Erfindungsgemäße Schaumstoffe (Schaumstoffträger) basieren insbesondere auf Homo- und Copolymeren des Ethylens, insbesondere werden Polyethylene niederer und sehr niederer Dichte (LDPE, LLDPE, VLDPE), Ethylen-Vinylacetat Copolymere, sowie Gemische vorgenannter Polymere genutzt Weitere Polymere können u. a. sein: Polyvinylacetate, Polypropylene, EPDM, thermoplastische Elastomere auf Basis von Styrolblockcopolymeren, Polyurethane auf Basis aromatischer und aliphatischer Diisocyanate, PVC, Polychloroprene, Naturkautschuk, Acrylatcopolymere. Schaumstoffe können vernetzt oder unvernetzt zum Einsatz kommen.

Die Dicken der eingesetzten Schaumstoffe liegen insbesondere zwischen 175 µm und 30 mm, bevorzugt zwischen 250µm und 7 mm. Raumdichten betragen 20 bis 500 kg/m³, bevorzugt 30 bis 300 kg/m³. Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.

### Vorbehandlung der Schäume

Zur Einstellung der Ablösekräfte werden die schaumstoffhaltigen Zwischenträger erfindungsgemäßer Selbstklebebänder einer Vorbehandlung / Schädigung durch z. B. Perforieren, Zerschneiden oder Stanzen unterzogen. Entsprechende Vorbehandlung kann vor oder nach der ersten Beschichtung mit Haftklebemasse durchgeführt werden. Ergebnis der Vorbehandlung sind insbesondere Einschnitte im schaumstoffhaltigen Träger oder Herauslösungen von Material aus dem schaumstoffhaltigen Träger, welche die mechanische Festigkeit des Trägers in der Richtung reduzieren, in der später die unter Verwendung selbiger Träger erzeugten Selbstklebebänder, durch Verstrecken im wesentlichen in der Verklebungsebene, gelöst werden sollen.

Beispiele für entsprechende Vorbehandlungen sind: Schnitte, Stanzungen und Perforationen. Diese können die Gesamtfläche der schaumstoffhaltigen Träger bedecken oder auch in begrenzten Bereichen vorliegen. Sie können eine regelmäßige Struktur bzw. Wiederholfolge oder unregelmäßig vorliegen.

Unterschieden werden können Vorbehandlungen, bei denen die ursprüngliche Form der schaumstoffhaltigen Trägermaterialien erhalten bleibt und solche, bei denen durch Stoffentnahme (z. B. Herausstanzen) oder durch thermische Behandlung (z. B. Aufschmelzen) materialfreie Bereiche etwa in Form von lochartigen oder kanalartigen Öffnungen im Träger erzeugt werden. Einschnitte sowie materialfreie Bereiche können lediglich teilweise oder auch vollständig den schaumstoffhaltigen Träger durchdringen oder auch in gemischter Form vorliegen. Sie können einseitig oder beidseitig in den schaumstoffhaltigen Träger eingebracht sein.

Zuvor genannte materialfreie Bereiche können im Herstellprozeß derart genutzt werden, daß sie im Endprodukt mit Haftklebemasse gefüllt sind, so daß bei doppelseitig mit Haftklebemasse beschichteten Klebstoff-Folien und den Schaumstoffträger durchdringende materialfreie Bereiche eine kontinuierliche Verbindung der beiden Haftkleberschichten vorliegt. Durch den so erhaltenen Formschluß wird u. a. die Integrität entsprechender Klebstoff-Folien beim Ablöseprozeß verbessert

### Verankerung der Haftklebemassen auf den Schäumen

Zur Erzeugung einer ausreichenden Verankerung der eingesetzten Haftklebemassen auf den schaumstoffhaltigen Trägern werden diese vorteilhaft bei der Schaumherstellung und / oder vor der Beschichtung einer Druckvorbehandlung unterzogen. Geeignete Vorbehandlungsverfahren sind u. a. die Fluorvorbehandlung, die Coronavorbehandlung, die Plasmabehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Träger zu reduzieren.

### Selbstklebebänder

Erfindungsgemäße Selbstklebebänder enthalten wenigstens einen schaumstoffhaltigen Träger, welcher einseitig oder beidseitig mit einer Haftklebemasse ausgerüstet ist. Die Klebmasse verfügt über eine ausreichende Reißdehnung und Reißfestigkeit, so daß entsprechende Selbstklebebänder durch Verstrecken insbesondere in der Verklebungsebene rückstands und zerstörungsfrei von den Verklebungsuntergründen wiederabgelöst werden können. Haftklebemassen können von gleicher oder unterschiedlicher Rezeptur sein, den Schaumstoff vollflächig oder teilweise, etwa im Streifenstrich, bedecken sowie mit gleichem oder unterschiedlichem Masseauftrag auf beide Klebebandseiten aufgetragen sein. Klebmassen können aus einer oder aus mehreren Klebmasseschichten aufgebaut sein. Z. B. kann eine Klebstoffschicht aus zwei Lagen bestehen, welche beide vinylaromatenhaltige Blockcopolymere als Polymerbasis nutzen, wobei die Blockcopolymere von gleicher oder unterschiedlicher Art sind. Auch kann auf eine erste Klebstoffschicht enthaltend vinylaromatenhaltige Blockcopolymere eine solche auf Basis weiterer Kautschuke, wie z. B Naturkautschuk oder Polybutadien oder Polyisobutylen oder "Kraton Liquid" (Shell Chemicals) oder Gemische vorgenannter Polymere aufgebracht sein.

Selbstklebebänder sind dadurch gekennzeichnet, daß ihre Reißdehnungen insbesondere größer als 200%, bevorzugt größer als 350%, besonders bevorzugt größer als 450% betragen.

Reißfestigkeiten der verwendeten Haftklebemassen liegen bei größer 1.5 MPa, bevorzugt bei größer 3 MPa, besonders bevorzugt bei größer 5 MPa.

Schichtstärken der die Reißfestigkeit bestimmenden Haftklebemassen betragen insbesondere ≥ ca 75µm, bevorzugt ≥ 125µm, besonders bevorzugt ≥ 160µm.

Das Verhältnis von Reißkraft zu Stripkraft der Selbstklebebänder ist bei Abzugswinkeln von < 10° gegen die Verklebungsfläche größer als 1,2 : 1, bevorzugt größer als 1,5 : 1, besonders bevorzugt größer als 2 : 1.

### Konfektionierform

Konfektionierformen erfindungsgemäßer Klebebänder umfassen sowohl Klebebandrollen als auch Klebebandstücke definierter Abmessungen, z. B. in Form von Stanzlingen. Klebebandstücke definierter Abmessungen können wahlweise entsprechend DE 4.428.587 ein ausgeformtes Ende, - etwa spitz zulaufendes Ende - aufweisen, oder entsprechend DE 4.431.914 mit trennlackierter Anfasserfolie oder trenlackiertem Trennpapier ausgerüstet sein.

### Herstellung

Erfindungsgemäße Klebstoff-Folien lassen sich durch Lösemittelbeschichtung, Kaltoder Heißlaminierung und durch Schmelzbeschichtung der zu verwendenden Schaumstoffe herstellen. Die Bearbeitung der schaumstoffhaltigen Träger durch z. B. Perforieren, Zerschneiden oder Stanzen kann mittels der üblichen, dem Fachmann bekannten Verfahren, z. B. mechanisch mittels Klingenschnitt, durch Verwendung einer Rotationsstanze, durch Nutzung von Perforationsmessern oder thermisch durch z. B. Laserperforation vorgenommen werden. Entsprechende Bearbeitung kann sowohl am schaumstoffhaltigen Träger selbst oder am einseitig mittels Haftklebemasse beschichteten Material durchgeführt werden.

### Prüfmethoden

### Kippscherfestigkeit

Zur Bestimmung der Kippscherfestigkeit wird die zu prüfende Klebstoff-Folie der Abmessung 20mm * 50mm, welche an einem Ende beidseitig mit einem nicht haftklebrigen Anfasserbereich versehen ist (erhalten durch Aufkaschieren von 25µm starker biaxial verstreckter Polyesterfolie der Abmessungen 20mm * 13mm (Hostaphan RN 25)), mittig auf eine hochglanzpolierte quadratische Stahlplatte der Abmessung 40mm * 40mm *3mm (Länge * Breite * Dicke) verklebt Die Stahlplatte ist rückseitig mittig mit einem 10cm langen Stahlstift versehen, welcher vertikal auf der Plattenfläche sitzt. Die erhaltenen Probekörper werden mit einer Kraft von 100N auf den zu prüfenden Haftgrund verklebt (Andruckzeit = 5sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ablösekraft (Stripkraft)

Zur Ermittlung der Ablösekraft (Stripkraft) wird eine Klebstoff-Folie der Abmessungen 50mm * 20mm (Länge * Breite), mit am oberen Ende nicht haftklebrigem Anfasserbereich (s. o.), zwischen zwei Stahlplatten (deckungsgenau zueinander angeordnet) der Abmessungen 50mm x 30mm, entsprechend dem unter "Kippscherfestigkeit" beschriebenen Vorgehen, jedoch mit Anpreßdrucken von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24h bei +40°C gelagert. Nach Rekonditionierung auf RT wird der Klebfolienstreifen mit einer Zuggeschwindigkeit von 1000mm/min parallel zur Verklebungsebene herausgelöst. Dabei wird die erforderliche Ablösekraft (Stripkraft) in N/cm gemessen. Die Stahlplatten werden abschließend auf vorhandene Klebmasserückstände überprüft.

### Verklebungsfläche auf Glas

Klebfolienstreifen der Abmessungen 20 mm x 50 mm werden mittig auf einen planaren Stahluntergrund der Abmessungen 200 mm x 100 mm verklebt. Der so hergestellte Verbund wird vertikal, deckungsgleich auf eine Glasplatte gleicher Abmessung verklebt und mit 100 N gleichmäßig mittig angedrückt. Die Andruckzeit beträgt 5 sec. Es erfolgt eine Dreifachbestimmung. Die erhaltene Verklebungsfläche auf der Glasoberfläche wird visuell ermittelt und in Prozent der Klebstoff-Folienoberfläche angegeben.

### Verklebungsfläche auf Rauhfasertapete

Zur Ermittlung der Verklebungsfläche auf rauhen Untergründen werden Klebfolienstreifen der Abmessungen 20 mm x 50 mm mittig auf einen planaren Stahluntergrund der Abmessungen 200 mm x 100 mm verklebt. Der so hergestellte Verbund wird vertikal, deckungsgleich auf eine gestrichene Rauhfasertapete (Tapete: Erfurt Körnung 52; Farbe: Herbol Zenit LG; Tapete verklebt auf Preßspanplatte) gleicher Abmessung, die dünn mit Alubronce bepudert wurde, aufgelegt und mit 100 N gleichmäßig mittig angedrückt. Die Andruckzeit beträgt 5 sec. Es erfolgt eine Dreifachbestimmung. Muster lassen sich leicht vertikal von der bepuderten Rauhfasertapete abheben. Die erhaltene Verklebungsfläche wird visuell über die auf die Klebfolienoberfläche übertragenen Alubronze ermittelt und in Prozent der Klebstoff-Folienoberfläche angegeben.

### Prüfung auf rückstandsfreies und zerstörungsfreies Wiederablösen

Eine entsprechende Prüfung wird im Rahmen der Bestimmung der Ablösekraft (Stripkraft) (s. o.) für die Untergründe Stahl // Stahl durchgeführt. Zur Prüfung der rückstandsfreien und zerstörungsfreien Wiederablösbarkeit auch auf anderen Untergründen, z. B. PMMA // gestrichene Rauhfasertapete (Tapete: Erfurt Körnung 52; Farbe: Herbol Zenit LG; Tapete verklebt auf Preßspanplatte), werden entsprechende Prüfkörper, wie oben unter "Ablösekraft (Stripkraft)" beschrieben, erstellt und die Verklebung entweder maschinell oder manuell gelöst (gestrippt). Bewertet wird, ob Klebmasserückstände auf den Verklebungsuntergründen vorhanden sind respektive ob Zerstörungen der Verklebungsuntergründe detektiert werden können.

### Beispiele

### Beispiele 1 bis 7

Alveolit TA 0501.5 und Alveolit TE 0500.8 (Alveo AG) werden in Bahnlängsrichtung einer Perforationsstanzung unterzogen, wodurch im Querabstand von 2mm 8mm lange, den ganzen Schaum durchdringende Einschnitte erzeugt werden, die durch 3mm lange nicht durchstanzte Bereiche unterbrochen sind. Benachbarte Stanzschnitte sind um 5,5mm gegeneinander verschoben, so daß jeweils übemächste Stanzschnitte deckungsgleich zueinander liegen. Auf entsprechende Schaumstoffe wird beidseitig eine Haftklebemasse bestehend aus 20 Tln. SBS Blockcopolymer (Vector 8508, Exxon), 80 Tln. SIS Blockcopolymer (Vector 4211, Exxon), 100 Tln. eines Pentaesters von teilhydriertem Kolophonium (Foralyn 110, Hercules) und 1 TI. eines primären Antioxidantes (Irganox 1010, Ciba Geigy) [= Rezeptur 1] durch Kaltlamination aufgebracht. Hierzu wird der gewählte Schaumstoff auf den auf silikonisiertem Trennpapier vorliegenden Haftklebstoff aufgelegt, danach mit einer gummibeschichteten Stahlwalze von 25 cm Breite bei einem Anpreßdruck von 50 N fünf mal überrollt. Das so erhaltene Zwischenprodukt wird in identischer Weise auf der zweiten Seite mit Haftklebstoff beschichtet. Prüfungen werden nach 24-stündiger Konditionierung der so erhaltenen Muster im Klimaraum (50 % rel. Feuchte, T = RT = 23°C) durchgeführt. Prüfkörper (Klebstoff-Folien) sind in allen Fällen quer zur Fertigungsrichtung des verwendeten Schaumstoffträgers herausgestanzt. Zum Vergleich werden die analogen nicht perforierten schaumstoffhaltigen Klebstoff-Folien sowie nicht schaumstoffhaltige Klebstoff-Folien untersucht. Es ergeben sich nachfolgende Eigenschaften:

| **Bspl. #** | **Musterbezeichnung** | **Schaumstoff Handelsname** | **Schaumstoff Art** | **Hersteller** |
|---|---|---|---|---|
| **1** | 3.014 | Alveolit TA 0501.5 | PE vemetzt | Alveo AG |
| **2** | 3.014A | Alveolit TA 0501.5 | PE vernetzt | Alveo AG |
| **3** | 3.014B | Alveolit TA 0501.5 | PE vernetzt | Alveo AG |
| **4** | 3.017E | Alveolit TE 0500.8 | EVAc vernetzt | Alveo AG |
| **5** | 3.017A | Alveolit TE 0500.8 | EVAc vernetzt | Alveo AG |
| **6** | 3.000A | - | - | - |
| **7** | 3.000B | - | - | - |

| **Musterbezeichnung** | **Schaumdicke in µm** | **Raumgewicht in kg/m**^{**3**} | **Klebmasseauftrag Seiten A // B** | **Klebmasserezeptur** |
|---|---|---|---|---|
| 3.014 | 1500 | 200 | 200 // 200 g/m² | [1] |
| 3.014A | 1500 | 200 | 200 // 200 g/m² | [1] |
| 3.014B | 1500 | 200 | 200 // 200 g/m² | [1] |
| 3.017E | 800 | 200 | 200 // 200 g/m² | [1] |
| 3.017A | 800 | 200 | 200 // 200 g/m² | [1] |
| 3.000A | - | - | 360 g/m² | [1] |
| 3.000B | - | - | 650 g/m² | [1] |

| **Musterbezeichnung** | **Stripkraft** | **Verklebungsfläche in % auf Rauhfaser // auf Glas** | | **Kippscherfestigkeit********* |
|---|---|---|---|---|
| 3.014 | 20-30 N/cm | ca 80 % | > 95 % | > 25 Tage |
| 3.014A | 8,7 N/cm | ca 80 % | > 95 % | > 25 Tage |
| 3.0141B | 9,5 N/cm | ca 80 % | > 95 % | > 25 Tage |
| 3.0175E | 26 N/cm | ca 80 % | > 95 % | > 25 Tage |
| 3.017A | 14 N/cm | ca 80 % | > 95 % | > 25 Tage |
| 3.000A | | ca 30 % | 40-50 %**** | 4 - 6 Tage |
| 3.000B | | ca 40 % | 60-70 %**** | 8 -12 Tage***** |

| | | | | |
|---|---|---|---|---|
| *** Hebelarm = 50 mm; Scherlast = 5 N; Haftgrund = gestrichene Rauhfasertapete | | | | |
| **** großflächige Lufteinschlüsse | | | | |
| ***** Rauhfasertapete spaltet im verklebten Bereich | | | | |

| **Musterbezeichnung** | **Schaumstoff zerreißt beim Ablösen ?** | **Klebstoff-Folie rückstands- und zerstörungsfrei stripbar*** | **Schaum perforiert ?** |
|---|---|---|---|
| 3.014 | ja | ja | nein |
| 3.014A | ** | ja | ja** |
| 3.014B | ** | ja | ja** |
| 3.017 | nein | ja | nein |
| 3.017A | ** | ja | ja** |
| 3.000A | - | ja | - |
| 3.000B | - | ja | - |

| | | | |
|---|---|---|---|
| * Verklebungsuntergründe = Stahl // Stahl und gestrichene Rauhfaser // PMMA | | | |
| ** Schaum perforiert entsprechend obiger Beschreibung; Schaum verformt sich irreversibel beim Verstrecken. | | | |

Durch die vorgenommene Vorbehandlung der Schaumstoffträger wird in allen Fällen eine deutliche Reduzierung der Ablösekräfte (Stripkräfte) erreicht.

Das rückstands- und zerstörungsfreie Ablöseverhalten wird hierdurch nicht beeiträchtigt Gleichfalls wirkt sich die vorgenommene Perforation nicht auf die erreichbare Verklebungsfläche sowie die erreichbaren Verklebungsfestigkeiten aus. In allen Fällen werden im Vergleich zu den Klebstoff-Folien, die keinen Schaumstoffzwischenträger nutzen wesentlich höhere Verklebungsflächen und Verklebungsfestigkeiten ermittelt.

## Patentansprüche

1. Klebeband für eine durch Zug rückstandsfrei und beschädigungslos wiederlösbare Verklebung, mit einem Schaumstoffträger, der einseitig oder beidseitig mit einer Selbstklebemasse beschichtet ist, **dadurch gekennzeichnet, daß**
a) auf mindestens einer der beiden Seiten des Schaumstoffträgers eine Selbstklebemasse aufgebracht ist, deren Verhältnis von Reißkraft zu Stripkraft (Abzugskraft) bei einem Abzugswinkel von weniger als 10° zur Verklebungsfläche größer als 1,2 : 1 ist,
b) der Schaumstoffträger derart gezielt vorbehandelt / geschädigt ist, daß die Ablösekraft (Stripkraft) im Vergleich zu einem analogen Selbstklebeband mit nicht entsprechend vorbehandeltem / geschädigten Schaumstoffträger, erniedrigt ist, und
c) der Schaumstoffträger keine für ein rückstands- und beschädigungsfreies Wiederablösen ausreichende Reißfestigkeit aufweist.

2. Klebeband nach Anspruch 1, **dadurch gekennzeichnet, daß** der Schaumstoffträger beidseitig mit Selbstklebemasse beschichtet ist.

3. Klebeband nach Anspruch 1, **dadurch gekennzeichnet, daß** die Selbstklebemasse eine solche auf Basis von Blockcopolymeren insbesondere von Vinylaromaten ist.

4. Klebeband nach Anspruch 1, **dadurch gekennzeichnet, daß** die Selbstklebemasse eine solche auf Basis von Blockcopolymeren enthaltend Polymerblöcke aus Vinylaromaten (A-Blöcke) und solchen gebildet durch Polymerisation von 1,3-Dienen (D-Blöcke) ist.

5. Klebeband nach Anspruch 1, **dadurch gekennzeichnet, daß** die Selbstklebemasse Klebrigmacher und gegebenenfalls weitere Abmischkomponenten und/oder Zusätze enthält.

6. Klebeband nach Anspruch 1, **dadurch gekennzeichnet, daß** die Vorbehandlung / Schädigung des Schaumstoffträgers durch Schnitte, Teilschnitte, Perforieren oder Stanzen erfolgt ist.

7. Klebstoff nach Anspruch 1, **dadurch gekennzeichnet, daß** die Schädigungen den Schaumstoffträger teilweise oder vollständig durchdringen.

8. Klebeband nach Anspruch 1, **dadurch gekennzeichnet, daß** es in Form von Abschnitten vorliegt, wobei das eine Ende des Abschnitts einen nicht-klebenden Anfasser aufweist und das andere Ende ggf. eine zum Ende hin abnehmende Klebfläche aufweist.

9. Klebeband nach Anspruch 8, **dadurch gekennzeichnet, daß** der Anfasser durch aufkaschierte Folienabschnitte gebildet wird, deren mit der Selbstklebemasse sich berührende Seiten anti-adhäsiv ausgerüstet sind.

10. Verwendung eines Abschnitts eines Klebebandes nach einem der Ansprüche 1 - 9 für eine rückstandsfrei und beschädigungslos wiederlösbare Verklebung, **dadurch gekennzeichnet, daß** man an einem Ende des Abschnitts zieht

11. Verwendung nach Anspruch 10, **dadurch gekennzeichnet, daß** man den beidseits mit Selbstklebemasse beschichteten Abschnitt zusammen mit einem Haken, einer Basisplatte oder einem aufzuhängenden Gegenstand ggf. auf diesen vorkonfektioniert verwendet.

## Claims

1. Adhesive tape for a bond which can be redetached by pulling, without residue and without damage, having a foam backing coated on one or both sides with a self-adhesive composition, **characterized in that**
a) on at least one of the two sides of the foam backing there is applied a self-adhesive composition whose ratio of tensile strength to stripping force (peel force) at a peel angle of less than 10° to the bond surface is greater than 1.2:1,
b) the foam backing is subjected to controlled pretreatment/damaging in such a way that the detachment force (stripping force) is lowered relative to an analogous self-adhesive tape with a foam backing which has not been correspondingly pretreated/damaged, and
c) the foam backing does not have a tear strength which is sufficient for redetachment without residue or damage.

2. Adhesive tape according to Claim 1, **characterized in that** the foam backing is coated on both sides with self-adhesive composition.

3. Adhesive tape according to Claim 1, **characterized in that** the self-adhesive composition is based on block copolymers especially of vinylaromatic compounds.

4. Adhesive tape according to Claim 1, **characterized in that** the self-adhesive composition is based on block copolymers comprising polymer blocks of vinylaromatic compounds (A blocks) and those formed by polymerization of 1,3-dienes (D blocks).

5. Adhesive tape according to Claim 1, **characterized in that** the self-adhesive composition comprises tackifiers and, if desired, comprises further blend components and/or additives.

6. Adhesive tape according to Claim 1, **characterized in that** the pretreatment/damaging of the foam backing is carried out by means of full cuts, partial cuts, perforation or punching.

7. Adhesive [sic] according to Claim 1, **characterized in that** the damage sites penetrate partway or completely through the foam backing.

8. Adhesive tape according to Claim 1, **characterized in that** it is in the form of sections, where one end of the section has a non-tacky grip tab and the other end, if desired, has an adhesive area which decreases towards the end.

9. Adhesive tape according to Claim 8, **characterized in that** the grip tab is formed by laminated-on film sections whose sides in contact with the self-adhesive composition have been given an anti-adhesive finish.

10. Use of a section of an adhesive tape according to one of Claims 1-9 for a bond which can be redetached without residue and without damage, **characterized in that** one end of the section is pulled.

11. Use according to Claim 10, **characterized in that** the section coated on both sides with self-adhesive composition is used together with a hook, a baseplate or an article which is to be suspended, and, if desired, is preassembled on such articles.

## Revendications

1. Ruban adhésif qui permet un collage libérable par traction sans laisser de résidus ni de détériorations, doté d'un support en mousse dont une face ou les deux faces est (sont) revêtue(s) d'une pâte adhésive, **caractérisé en ce que**
a) sur au moins l'une des deux faces du support en mousse, on applique une pâte adhésive dont le rapport entre la force de déchirure et la force d'arrachage (force de libération) sous un angle d'enlèvement inférieur à 10° par rapport à la surface collée est supérieur à 1,2:1,
b) le support en mousse est pré-traité ou détérioré de façon contrôlée de telle sorte que la force de libération (force d'arrachage) soit diminuée par rapport à un ruban autocollant analogue qui ne présente pas un support en mousse pré-traité ou détérioré de manière correspondante et
c) le support en mousse ne présente pas une résistance à la rupture qui suffit pour un enlèvement qui ne laisse pas de résidus ni de détériorations.

2. Ruban adhésif selon la revendication 1, **caractérisé en ce que** le support en mousse est revêtu des deux côtés d'une pâte adhésive.

3. Ruban adhésif selon la revendication 1, **caractérisé en ce que** la pâte adhésive est une pâte adhésive à base de copolymères séquencés, et en particulier de vinyle aromatique.

4. Ruban adhésif selon la revendication 1, **caractérisé en ce que** la pâte adhésive est une pâte à base de copolymères séquencés qui contiennent des séquences polymères de vinyle aromatique (séquences A) et des séquences polymères formées par polymérisation de 1,3-diènes (séquences D).

5. Ruban adhésif selon la revendication 1, **caractérisé en ce que** la pâte adhésive contient des agents d'adhérence et éventuellement d'autres composants et/ou additifs de mélange.

6. Ruban adhésif selon la revendication 1, **caractérisé en ce que** le pré-traitement et/ou la détérioration du support en mousse est (sont) réalisé(s) par découpe, découpe partielle, perforation ou estampage.

7. Adhésif selon la revendication 1, **caractérisé en ce que** les détériorations traversent le support en mousse partiellement ou complètement.

8. Ruban adhésif selon la revendication 1, **caractérisé en ce qu'**il se présente sous la forme de morceau, une extrémité du morceau présentant une pièce de saisie non adhésive et l'autre extrémité présentant une surface adhésive qui diminue vers l'extrémité.

9. Ruban adhésif selon la revendication 8, **caractérisé en ce que** la pièce de saisie est formée par un morceau de film de masquage dont le côté en contact avec la pâte adhésive a été rendu anti-adhésif.

10. Utilisation d'un morceau d'un ruban adhésif selon l'une quelconque des revendications 1 à 9 pour un collage libérable sans laisser de résidus ni de détériorations, **caractérisée en ce que** l'on tire une extrémité du morceau.

11. Utilisation selon la revendication 10, **caractérisée en ce que** l'on utilise le morceau revêtu sur ses deux faces de la pâte adhésive en même temps qu'un crochet, une plaque de base ou un objet à suspendre, qui est éventuellement pré-confectionné sur ce morceau.
